# EUROPÄISCHE PATENTSCHRIFT

(11) **EP 0 880 815 B1**
(45) Veröffentlichungstag und Bekanntmachung des Hinweises auf die Patenterteilung: **19.09.2001**
(21) Anmeldenummer: 97914112.4
(22) Anmeldetag: 31.01.1997
(51) Int. Cl.: H02K 1/04, H01F 27/245, H01F 41/02, H02K 15/02

(54) **VERFAHREN ZUR HERSTELLUNG VON BLECHPAKETEN UND ELEKTROMAGNETISCHEN BAUGRUPPEN**
PROCESS FOR THE PRODUCTION OF LAMINATED CORES AND ELECTROMAGNETIC UNITS
PROCEDE POUR LA PRODUCTION DE NOYAUX FEUILLETES ET MODULES ELECTROMAGNETIQUES

(30) Priorität: 12.02.1996 CH 35996
(43) Veröffentlichungstag der Anmeldung: 02.12.1998
(73) Patentinhaber: Vantico AG, 4057 Basel (CH); Thyssen Transrapid System GmbH, 34127 Kassel (DE)
(72) Erfinder: SETIABUDI, Frans, D-79427 Eschbach (DE); GEHRIG, Michel, CH-4410 Liestal (CH); MASSEN, Ulrich, D-79618 Rheinfelden (DE); MOSER, Roland, CH-4058 Basel (CH); MOSER, Thomas, CH-4310 Rheinfelden (CH); MILLER, Luitpold, D-85521 Ottobrunn (DE); HAHN, Wolfgang, D-34125 Kassel (DE)
(74) Vertreter: Freiherr von Schorlemer, Reinfried, Dipl.-Phys.
(86) Internationale Anmeldenummer: DE9700200
(87) Internationale Veröffentlichungsnummer: WO9730504

(56) Entgegenhaltungen:
- DE-A- 1 538 991
- DE-A- 2 009 631
- DE-A- 2 360 820
- DE-A- 3 012 320
- DE-A- 4 338 913
- BULLETIN DER SCHWEIZISCHEN ELEKTROT. VEREINS, Bd. 63, Nr. 22, 28.Oktober 1972, XP002032838 W DIETERLE UND J SCHIRR: "ELEKTRISCHE UND MECHANISCHE EIGENSCHAFTEN VON IM DRUCKGELIERVERFAHREN HERGESTELLTEN EPOXIDHARZFORMSTOFFEN"

## Beschreibung

Die Erfindung betrifft ein Verfahren zur Herstellung von Blechpaketen nach dem Oberbegriff des Anspruchs 1 und zur Herstellung von mit derartigen Blechpaketen versehenen, elektromagnetischen Baugruppen nach dem Oberbegriff des Anspruchs 2.

Elektromagnetische Baugruppen, die mit Wechselfeldem arbeiten, weisen häufig Eisenkerne aus ferromagnetischem Material auf, die dem Zweck dienen, magnetische Felder überall dort zu führen, wo keine Luftspalte vorgesehen oder erwünscht sind. Zur Vermeidung von Wirbelströmen und Wirbelstromverlusten werden diese Eisenkerne überwiegend aus einer Vielzahl von Blechzuschnitten zusammengesetzt, die durch Stanzen aus Blechtafeln oder -bändern erhalten werden, die aus z.B. 0,35 bis 1,00 mm starken Stahlbzw. Eisenblechen bestehen und durch einen Lacküberzug, eine Oxidschicht oder andere Mittel gegeneinander isoliert sind. Die Isolierung kann sowohl bereits im Walzwerk am Blechband oder -streifen als auch nachträglich in einer besonderen Beschichtungsanlage an den Bändern, Streifen oder Tafeln angebracht werden und besteht heute meistens aus einer sehr dünnen Silikat-Phosphat-Schicht, die während des Auswalzens der Bleche aufgebracht wird.

Daneben ist es häufig erwünscht, die einzelnen Stanzzuschnitte zu einem festen Blechpaket miteinander zu verbinden. Dies wird z.B. durch Anwendung von mechanischen, durch Formschluß wirksamen Mitteln oder einfach dadurch erreicht, daß die fertigen Blechpakete bzw. Kerne mit einer Wicklung umgeben werden, in welchem Fall es allerdings zusätzlich erforderlich ist, die Wicklungen gegen den Kern elektrisch zu isolieren.

Zur Vermeidung derartiger Verbindungsverfahren, die zwar vergleichsweise preisgünstiger, aber nicht immer anwendbar sind, ist es bereits bekannt (DE 31 10 339 C2), zunächst aus siliziertem Elektroblech hergestellte Streifen vorzugsweise beidseitig mit zusätzlichen Kleberschichten zu versehen, die z.B aus einem vorgehärteten duroplastischen Kleber bestehen und ggf. bereits im Walzwerk in einem aufwendigen, kostspieligen Arbeitsschritt aufgebracht werden. Die Herstellung der Blechpakete erfolgt dann dadurch, daß aus derartigen, von Coils (Trommeln) abgezogenen Blechstreifen Blechzuschnitte bzw. Lamellen ausgestanzt und diese dann zu Stapeln zusammengesetzt und danach durch Erwärmung unter gleichzeitiger Pressung mechanisch fest zu einem Blechpaket miteinander verbunden werden. Anschließend werden die fertigen Blechpakete zusätzlich mit einem Überzug aus einem Epoxidharz od. dgl. versehen, um die beim Stanzen freigelegten Schnittkanten der Bleche nachträglich mit einem Korrosionsschutz zu versehen. Dieses Verfahren eignet sich daher zwar zur Herstellung kompakter, qualitativ hochwertiger Blechpakete, wird aber wegen des hohen technischen Aufwandes und der erforderlichen hohen Herstellungskosten für die Beschichtung der Bleche mit Kleber nur selten angewendet. Nachteilig ist ferner, daß der beim Stanzen der Blechzuschnitte anfallende Verschnitt mit einer Kleberschicht versehen ist, was ein sortenfreies Recycling des Blechverschnitts verhindert und daher aus Umweltschutzgründen vermieden werden sollte.

Weiterhin ist ein Verfahren der eingangs bezeichneten Gattung bekannt (DE-A-30 12 320), bei dem auf Abstand gehaltene Elektrobleche, die keine Kleberschichten aufweisen, dadurch miteinander verbunden werden, daß sie im gestapelten Zustand in ein Werkzeug gegeben und die Zwischenräume zwischen ihnen mit einem aushärtbaren Klebstoff ausgefüllt werden. Die Abstände zwischen den Elektroblechen werden dabei mittels Abstandhaltern erhalten, die z.B. aus den Körnern eines durch Sintern aufgebrachten Metalloxidpulvers bestehen, und sind gleich oder kleiner als 2 *µ*m. Dadurch, daß die Elektrobleche mit einer zusätzlichen Metalloxidschicht versehen werden müssen, ist der Arbeits- und Kostenaufwand gegenüber der Anbringung der üblichen Kleberschichten nicht geringer. Außerdem müssen die fertigen Blechpakete zusätzlich mit einer äußeren Korrosionsschutz versehen werden, falls ein Schutz gegen Korrosion erwünscht oder erforderlich ist. Schließlich ist es bei Anwendung dieses bekannten Verfahrens erforderlich, im Werkzeug ein Fein- bzw. Hochvakuum von ca. 1,3 10⁻³ mbar und weniger aufrechtzuerhalten, was aus verfahrenstechnischen Gründen unerwünscht ist und den insgesamt erforderlichen Arbeits- und Kostenaufwand vergrößert.

Schließlich ist es bekannt (DE-A-15 38 991), die einzelnen Bleche eines Blechpakets für elektrische Maschinen dadurch gegeneinander zu isolieren, daß von einer Mittelbohrung des gestapelten Blechpakets aus mittels Druckluft ein Isolierstoff radial in die Zwischenräume zwischen den einzelnen Blechen gepreßt wird. Das Erreichen einer vollständigen Isolierung soll dabei dadurch angezeigt werden, daß der Isolierstoff an der Außenwandung des Pakets austritt. Abgesehen davon, daß sich ein solches Verfahren nicht zur Serienfertigung von in hohen Stückzahlen herzustellenden Blechpaketen eignet, erfordert es wie die anderen genannten Verfahren bei Bedarf einen weiteren Schritt zum Aufbringen einer Korrosionsschutzschicht.

Blechpakete der beschriebenen Art werden außerdem häufig zusammen mit anderen Bauelementen zu fertigen Baugruppen miteinander verbunden. Hierzu ist es z.B. bekannt (DE 40 21 591 C2), die Einzelteile eines Ständers eines Elektromotors, insbesondere ein Blechpaket und die zugehörigen Wicklungen, in einem formgebenden Werkzeug mit einem Gießharz zu umgeben, wodurch einerseits die Wicklungen elektrisch isoliert werden und andererseits ein zusammenhängender Verbundkörper erhalten wird. Entsprechend ist es bei der Herstellung der Läufer von Elektromotoren bekannt (DE 43 38 913 A1), die zugehörigen Wellen, Blechpakete, Wicklungen und Kommutatoren zunächst lose zusammenzustecken und dann in einem formgebenden Werkzeug durch Spritzgießen, Spritzspressen od. dgl. mit einer Kunststoffumhüllung zu versehen. Dabei ergibt sich zwar auch der Vorteil, daß das Blechpaket an den beim Stanzen der Bleche freigelegten Schnittkanten nachträglich mit einer Isolierung bzw. einem Korrosionsschutz versehen wird. Bei allen diesen Verfahren wird jedoch das Vorhandensein von fertigen, auf die oben erläuterte Weise hergestellten Blechpakete vorausgesetzt.

Der Erfindung liegt die Aufgabe zugrunde, ein Verfahren zur Herstellung von Blechpaketen und von mit Blechpaketen versehenen elektromagnetischen Baugruppen vorzuschlagen, das die Anwendung einfacher, kostengünstiger Bleche ermöglicht, deren Verschnitt umweltverträglich entsorgt werden kann, und das ferner weniger Einzelschritte als bisher erfordert und daher insbesondere zu Vereinfachungen bei der Herstellung der Baugruppen führt. Außerdem sollen eine hohe mechanische Festigkeit und eine hohe Beständigkeit gegen äußere oder innere Witterungseinflüsse erzielt werden.

Zur Lösung dieser Aufgabe dienen die kennzeichnenden Merkmale der Ansprüche 1, 2, 10 und 11.

Weitere vorteilhafte Merkmale der Erfindung ergeben sich aus den Unteransprüchen.

Die Erfindung ist überall dort mit Vorteil anwendbar, wo aus ferromagnetischem Material hergestellte Blechpakete benötigt werden. Der Ausdruck "elektromagnetische Baugruppen" umfaßt daher insbesondere elektrische Maschinen auf Drehstrom-, Synchron- und Asynchronbasis und Teile davon wie z.B. Ständer und Läufer sowie Drosselspulen mit Eisenkernen, Transformatoren und Magnete, insbesondere Lasthebe- oder Hubmagnete und Teile davon.

Die Erfindung wird nachfolgend anhand von zwei Ausführungsbeispielen näher erläutert, die in der beiliegenden Zeichnung mit geringfugig variierenden Maßstäben dargestellt sind. Es zeigen:
Fig. 1 einige Bleche eines Blechpakets für einen erfindungsgemäßen Magnetkern in einer perspektivischen, auseinandergezogenen Darstellung;
Fig. 2 eine perspektivische Darstellung der zur Herstellung eines kompletten Magnetkerns verwendeten Bauelemente bei in gestapeltem Zustand befindlichem Blechpaket;
Fig. 3 eine perspektivische Darstellung des Magnetkerns nach Fig. 2 im zusammengesetzten Zustand aller Bauelemente;
Fig. 4 in einer perspektivischen Darstellung die Bewicklung eines Wickelkörpers des Magnetkerns nach Fig. 3;
Fig. 5 in einer perspektivischen Darstellung einen mit dem Magnetkern nach Fig. 1 bis 4 hergestellten Magnetpol nach dem Anordnen in einer Hälfte eines Werkzeugs, das zur Imprägnierung des Blechpakets, zur Durchtränkung des Blechpakets und der Wicklung, zur Verbindung des Blechpakets mit den übrigen Bauteilen und zur Umhüllung des gesamten Magnetpols mit einem härtbaren Gemisch dient;
Fig. 6 einen Querschnitt durch das Werkzeug längs der Linie VI-VI der Fig. 5 mit eingelegtem Magnetpol;
Fig. 7 schematisch das Einbringen eines härtbaren Gemischs in das Werkzeug nach Fig. 5 und 6;
Fig. 8 eine perspektivische Darstellung des fertigen Magnetpols;
Fig. 9 in teilweise auseinandergezogener Darstellung einen Längsschnitt durch ein Blechpaket für den Ständer einer elektrischen Maschine;
Fig. 10 eine Draufsicht auf einen Abschnitt einer Baugruppe, die das Blechpaket nach Fig. 9 und schematisch dargestellte Wicklungen umfaßt;
Fig. 11 einen Schnitt längs der Linie XI-XI der Fig. 10;
Fig. 12 einen Schnitt analog zu Fig. 11 durch die Baugruppe, jedoch nach dem Einlegen in ein Werkzeug, das zur Imprägnierung des Blechpakets, zur Durchtränkung des Blechpakets und der Wicklung, zur Verbindung des Blechpakets mit den Wicklungen des Ständers und zur Umhüllung des gesamten Ständers mit einem härtbaren Gemisch dient;
Fig. 13 schematisch das Einbringen eines härtbaren Gemischs in das Werkzeug nach Fig. 12; und
Fig. 14 einen Schnitt analog zu Fig. 11 durch den fertigen Ständer.

Die Erfindung wird nachfolgend an den Beispielen eines Magnetpols, der z.B. für eine Magnetschwebebahn geeignet ist (DE 33 03 961 C2 und DE 34 10 119 A1), und eines Ständers für eine elektrische Maschine näher erläutert, deren Aufbau, Funktion und Geometrie dem Fachmann allgemein bekannt sind und daher nicht näher erläutert werden brauchen.

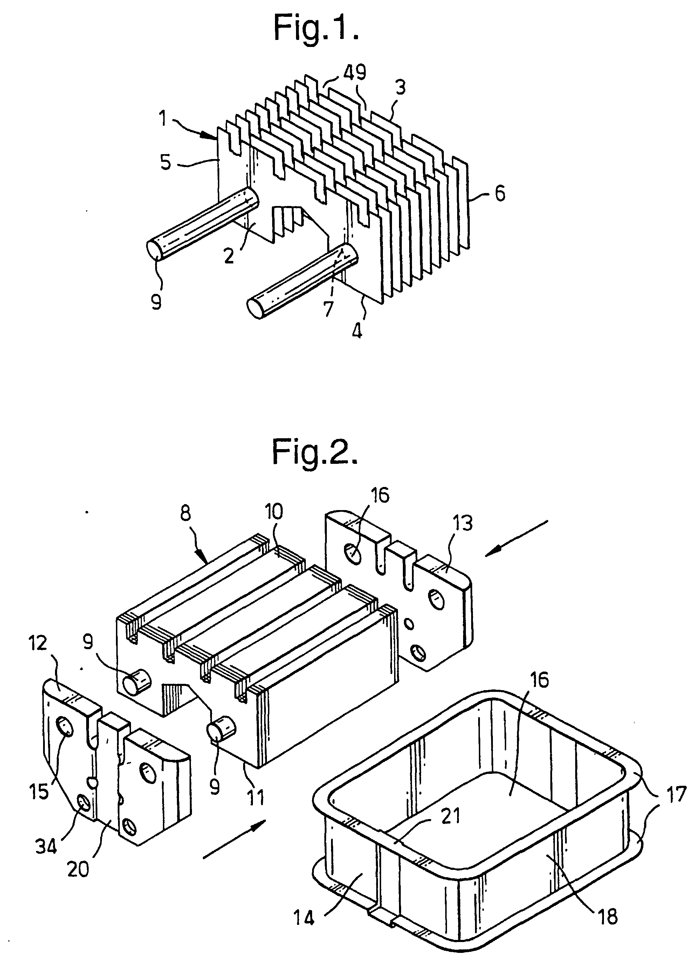

Ein Magnetpol enthält in an sich bekannter Weise einen aus einem Blechpaket bestehenden Eisenkern und eine auf diesen aufgebrachte Wicklung. Nach Fig. 1 bis 8 besteht der Eisenkern aus einer Vielzahl von einzelnen, parallel angeordneten und bündig aufeinander ausgerichteten Blechen oder Lamellen 1, die z.B. durch Ausstanzen aus einem ferromagnetischen Elektroblechstreifen erhalten werden, der von einer Trommel (Coil) abgewikkelt und einem Stanzwerkzeug zugeführt wird. Erfindungsgemäß handelt es sich um einen rohen Elektroblechstreifen. Dabei wird unter der Bezeichnung "roh" verstanden, daß der Elektroblechstreifen im Gegensatz zu DE 31 10 339 C2 keine in einem besonderen Arbeitsgang aufgebrachte Kleberschicht aufweist. Dagegen kann der Blechstreifen, wie es bei Elektroblechen üblich ist, durch einen Lacküberzug, eine Oxidschicht oder andere preisgünstig aufbringbare Mittel beidseitig mit einer elektrisch isolierenden Schicht versehen sein. Diese Schicht kann bereits im Walzwerk am Blechstreifen angebracht werden und besteht bei heute üblichen Elektroblechen meistens aus einer sehr dünnen Silikat-Phosphat-Schicht, die während des Auswalzens der Elektrobleche hergestellt wird. Für die Zwecke der Erfindung ist diese Schicht vergleichsweise unbedeutend, da sie u. U. auch völlig fehlen kann.

Die einzelnen Bleche 1, von denen in Fig. 1 nur einige dargestellt sind, haben im Ausführungsbeispiel bei einer Dicke von z.B. 0,35 bis 1,00 mm identische Abmessungen und weisen je eine vordere bzw. hintere Breitseite 2 und in Umfangsrichtung je eine schmale Oberseite 3, eine Unterseite 4 und zwei Seitenkanten 5 und 6 auf. Sie werden außerdem beim Stanzvorgang an identischen Stellen mit wenigstens je einem Loch 7 versehen und zur Bildung des Eisenkerns nach dem Stanzvorgang zu Paketen 8 (Fig. 2) gestapelt, indem sie mit ihren vorderen bzw. hinteren Breitseiten 2 bündig und parallel aneinander gelegt werden. Die Zahl der Bleche 1 pro Paket 8 hängt dabei von der Größe und Stärke des herzustellenden Magnetpols ab. Die gegenseitige Ausrichtung der Bleche 1 erfolgt zweckmäßig mit Hilfe von Nutensteinen oder Stäben 9, auf welche die Bleche 1 mit ihren Löchern 7 aufgefädelt werden. Im gestapelten Blechpaket 8 bilden z.B. die Oberseiten 3 der einzelnen Bleche 1 eine Magnetpolfläche 10, die Unterseiten 4 dagegen eine Montagefläche 11.

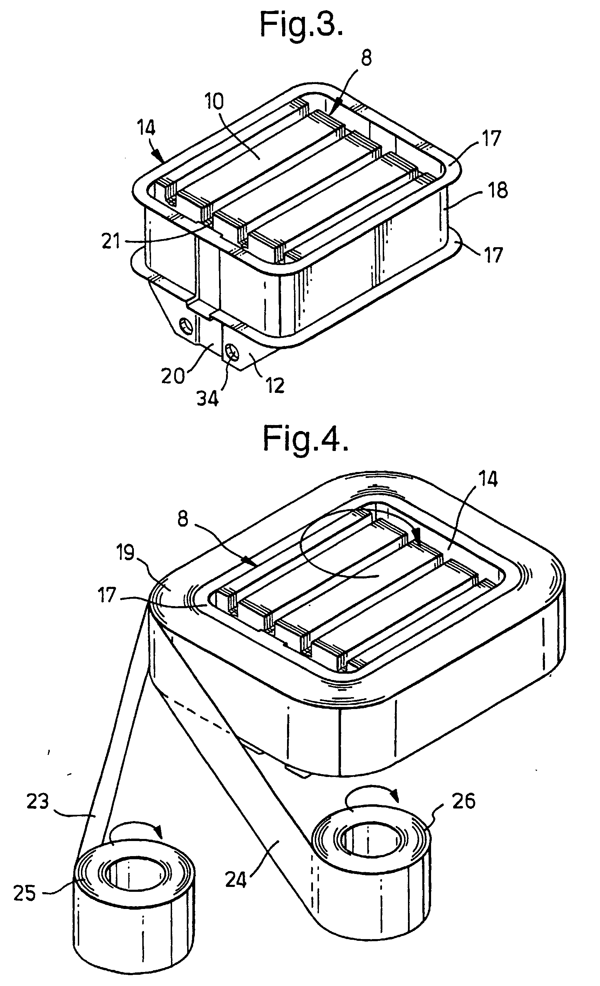

Nach der Stapelbildung werden die beiden Stirnseiten des Blechpakets 8 mit je einem zusätzlichen Bauelement in Form einer Polwange 12,13 verbunden, die für die erforderliche Stabilität des Magnetkerns sorgen und als Träger eines weiteren Bauelements in Form eines Wickelkörpers 14 (Fig. 2 und 3) dienen. Die relative Ausrichtung der Polwangen 12,13 zum Blechpaket 8 erfolgt zweckmäßig dadurch, daß die Polwangen 12,13 mit Löchern 15 versehen und mit diesen auf die aus dem Blechpaket 8 ragenden Enden der Stäbe 9 aufgesteckt werden und diese Enden dann in sich aufnehmen. Obwohl die Polwangen auch aus Eisen bestehen könnten, werden sie zur Gewichtsreduzierung vorzugsweise aus Aluminium hergestellt.

Der Wickelkörper 14 besteht im wesentlichen aus einem aus Isoliermaterial, z.B. Kunststoff hergestellten Rahmen, der einen im Ausführungsbeispiel im wesentlichen quaderförmigen Hohlraum 16 umgibt, dessen Abmessungen in Höhe, Länge und Breite im wesentlichen den Außenabmessungen des Blechpakets 8 einschließlich der Polwangen 12 und 13 entsprechen. Außerdem ist der Wickelkörper 14 an seinem oberen und unteren Ende mit je einem nach außen ragenden, umlaufenden Montageflansch 17 versehen, so daß zwischen den beiden Montageflanschen 17 ein umlaufender Aufnahmeraum 18 für eine Wicklung 19 (Fig. 4) entsteht.

Zur richtigen Positionierung des Wickelkörpers 14 relativ zum Blechpaket 8 sind die Polwangen 12,13 an ihren äußeren Stirnseiten mit Führungsnuten 20 versehen, die senkrecht zu den Stäben 9 und zur Magnetpolfläche 10 angeordnet sind. Entsprechend weist der Wickelkörper 14 an zwei gegenüberliegenden Seiten nach innen ragende Führungsrippen 21 auf, die beim von oben oder unten her erfolgenden Aufsetzen des Wickelkörpers 14 auf das Blechpaket 8 in die Führungsnuten 20 eintreten und dann eine relative Verschiebung des Wickelkörpers 14 zur Magnetpolfläche 10 bis in eine gewünschte Position ermöglichen (Fig. 3), die zweckmäßig durch einen nicht näher dargestellten Anschlag festgelegt ist.

Wie insbesondere Fig. 4 zeigt, wird der Wickelkörper 14 nach seiner Positionierung auf dem Blechpaket 8 mit der Wicklung 19 versehen, die aus abwechselnd aufeinanderfolgenden Lagen eines Leiters 23 und eines Isolators 24 gebildet wird und zwischen den Montageflanschen 17 zu liegen kommt. Der Leiter 23 besteht z.B. aus einem endlosen, von einer Vorratsspule 25 abgewickelten Aluminiumband, während der Isolator 24 z.B. ein von einer Vorratsspule 26 abgewickelter Streifen aus einer üblichen Isolierfolie ist. Die Abwicklung des Leiters 23 und des Isolators 24 von den Vorratsspulen 25,26 bzw. ihre Aufwicklung auf den Wickelkörper 14 erfolgt in Richtung der in Fig. 4 eingezeichneten Pfeile in an sich bekannter Weise. Alternativ wäre es natürlich auch möglich, die Wicklung 22 auf den Wickelkörper 14 aufzubringen, bevor dieser auf dem Blechpaket 8 montiert wird, oder die hier als Lagenwicklung dargestellte Wicklung in mehrere, untereinander zu verschaltende Scheiben aufzuteilen.

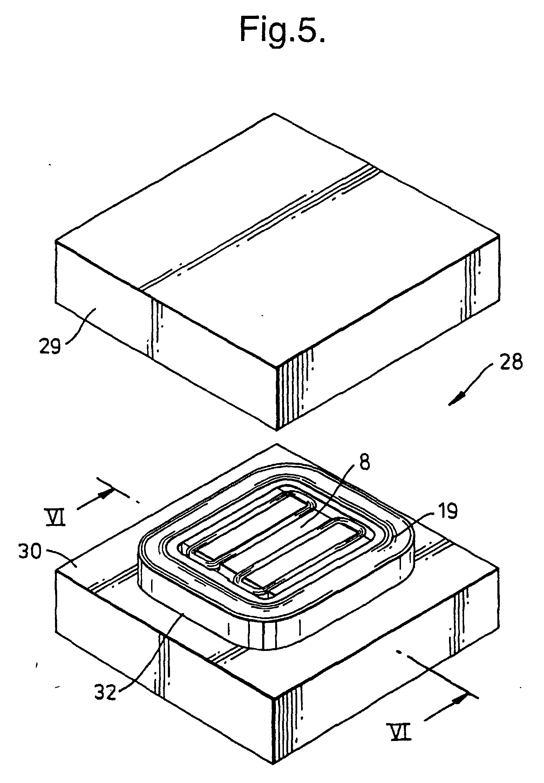

Bei der anhand der Fig. 1 bis 3 beschriebenen Baugruppe in Form eines Magnetkerns werden die einzelnen, lose auf die Stäbe 9 aufgefädelten Bleche 1 lediglich durch die Stäbe 9 und den Wickelkörper 14 in Position gehalten, wobei der Wickelkörper 14 an den Seitenkanten 5,6 der Bleche 1 und an den Vorder- bzw. Rückseiten der Polwangen 12, 13 anliegt. Dagegen wird die Wicklung 19 durch die Montageflansche 17 auf dem Magnetkern in Position gehalten. Dabei werden über die Polwangen 12,13 gleichzeitig die Bleche 1 mit einem vorgewählten Druck gegeneinander gepreßt, damit sie dicht aneinander liegen. Zur festen Verbindung aller dieser Teile wird die im wesentlichen aus Fig. 4 ersichtliche Baugruppe in eine Form bzw. ein formgebendes Werkzeug 28 (Fig. 5 bis 7) eingelegt, wobei es sich im Ausführungsbeispiel um ein Werkzeug 28 mit zwei Werkzeughälften 29 und 30 handelt, die analog zu einem Spritzgußwerkzeug an einander gegenüberliegenden Seiten mit Aussparungen 31,32 versehen sind, die im geschlossenen Zustand des Werkzeugs 28 (Pig. 7) eine Kavität bzw. Formhöhlung bilden, deren Abmessungen nur geringfügig größer als die Außenabmessungen des fertig bewickelten Magnetpols sind.

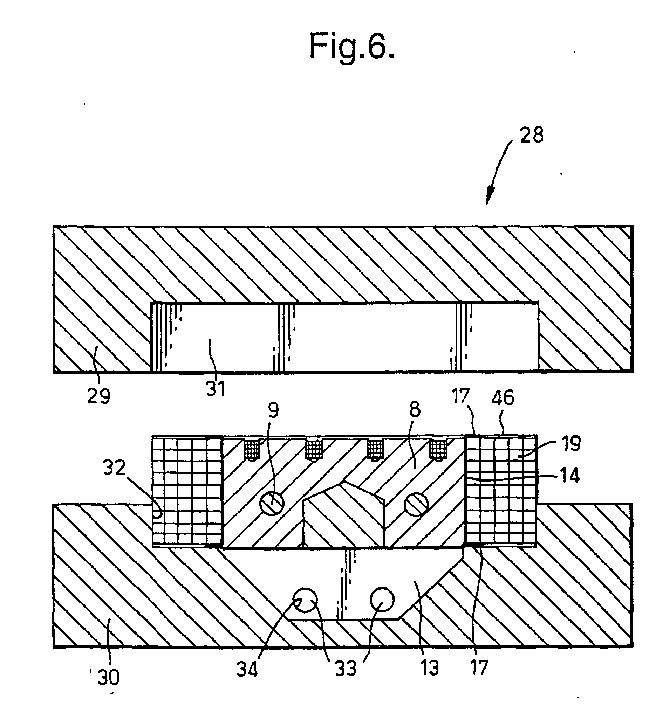

Zur richtigen Positionierung des Magnetpols in der Kavität dienen einerseits z.B. die unteren Montageflansche 17, andererseits bei Bedarf zusätzliche Positionierungsmittel 33. Im Ausführungsbeispiel bestehen diese aus Stäben, die in Löcher 34 (Fig. 2) ragen, die in den Polwangen 12,13 zusätzlich zu den Löchern 16 und an Stellen ausgebildet sind, die im montierten Zustand unterhalb des Wicklungskörpers 14 zugänglich bleiben, wie insbesondere Fig. 6 zeigt. Die Positionierungsmittel 33 sind z.B.in den Seitenwangen der Werkzeughälfte 30 gelagert und werden beim Schließen des Werkzeugs 28 automatisch in die Löcher 34 eingefahren. Weitere, nicht dargestellte Positionierungsmittel können am Boden der Werkzeughälfte 30 angeordnet sein. Auf diese Weise ist es möglich, das Blechpaket 8 und den Wickelkörper 14 relativ zueinander im Werkzeug auszurichten.

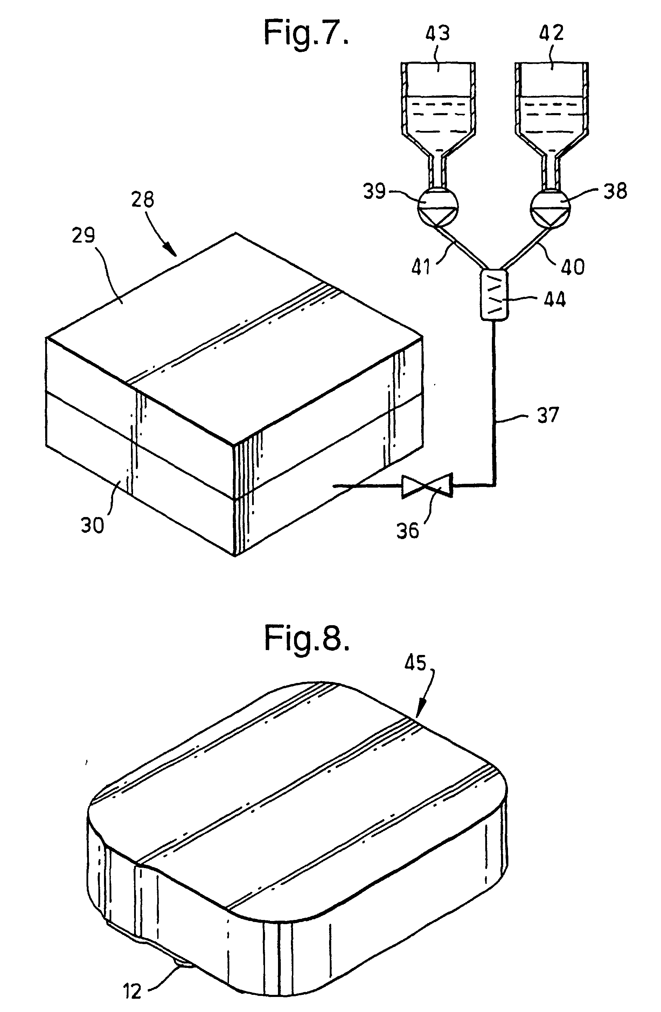

Eine der Werkzeughälften 29,30 ist gemäß Fig. 7 mit einer bis zur Kavität reichenden Einlaßöffnung versehen, an die der Ausgang einer mit einem Steuerventil 36 versehenen Leitung 37 angeschlossen ist, die außerdem zwei an je eine Dosierpumpe 38 und 39 angeschlossene Eingänge 40 und 41 aufweist. Den Dosierpumpen 38,39 ist je ein Mischbehälter 42,43 vorgeschaltet und ein in die Leitung 37 geschalteter Mischer 44 nachgeschaltet. Diese Einrichtungen dienen dem Zweck, ein härtbares Gemisch, insbesondere eine Gießharzmischung vorzubereiten und nach dem Schließen des Werkzeugs 28 in die Kavität einzuführen. Dadurch werden in einem einzigen Arbeitsgang mehrere Aufgaben erfüllt. Einerseits werden die lose gestapelten Bleche 1 des Blechpakets 8 durch das Einbringen des Gemischs mit den zwischen ihnen erforderlichen, klebend wirkenden Schichten versehen und gleichzeitig wie bei Anwendung eines Klebers zu einem festen Paket miteinander verbunden. Andererseits wird dieses Paket mit den übrigen Bauelementen der den fertigen Magnetpol (Fig. 8) bildenden Baugruppe 45 zu einer festen Baueinheit miteinander verbunden, die gleichzeitig als Ganzes und insbesondere an den Schnittkanten der Bleche 1 mit einer Korrosionsschutzschicht überzogen wird, die in Fig. 6 schematisch durch eine Linie 46 angedeutet ist. Die vorwählbare Dicke dieser Schicht hängt dabei im wesentlichen von dem Abstand ab, den die verschiedenen Bauelemente der Baugruppe nach dem Einbringen in das Werkzeug voneinander und von den die Kavität begrenzenden Wandteilen aufweisen, und kann z.B. bis 10 mm, vorzugsweise 2 bis 3 mm betragen. Außerdem erhält die Baugruppe 45 durch die vollständige Umhüllung mit dem härtbaren Gemisch ihre endgültigen mechanischen, elektromagnetischen und geometrischen Eigenschaften, wozu insbesondere auch die vom Einzelfall abhängige spezielle Ausbildung des Werkzeugs 28 und der die Formhöhlung bildenden Aussparungen 31, 32 beitragen.

Das zu verwendende Gemisch ist vorzugsweise eine härtbare (duroplastische) Gießharzmischung auf Epoxid- oder Polycycloolefinbasis und besteht z.B. aus zwei Komponenten, nämlich z.B. einem im Mischbehälter 42 bereitgestellten, ggf. mit einem Zuschlag versehenen Gießharz, z.B. einem Epoxidharz oder Epoxidharzgemisch, und einem im Mischbehälter 43 bereitgestellten Härter, z.B. einem Epoxidhärter. Die beiden Komponenten werden mittels der Dosierpumpen 38, 39 in einem vorgewählten Verhältnis dosiert, in den Mischer 44 eingeleitet, in diesem innig miteinander vermischt und dann von dort über die Leitung 37 und das Steuerventil 36 in die Kavität eingeführt. Dabei erfolgt die Zuführung der Gießharzmischung vorzugsweise unter einem Druck von z.B. 1 - 3 bar, um insbesondere das Blechpaket 8 so zu durchtränken bzw. zu imprägnieren, daß alle Bleche allseitig in eine dünne Gießharzschicht eingehüllt werden.

Nach dem Füllen der Kavität wird die Gießharzmischung, vorzugsweise unter Erwärmung des gesamten Werkzeugs 28, der Aushärtung überlassen, bis eine Entformung stattfinden und die fertige Baugruppe 45 aus dem Werkzeug 28 herausgenommen werden kann. Alternativ kann das Werkzeug 28 auch bereits vor dem Einbringen der Gießharzmasse erwärmt werden. Am besten ist es außerdem, die Gießharzmasse im Werkzeug 28 nur anzuhärten und die fertigen Baugruppen 45 dann einer Wärmebehandlung (Tempern) zu unterziehen, um z.B. den Aushärtvorgang abzuschließen und/oder langsam flüchtige Bestandteile auszutreiben. Zusätzlich könnte noch ein Reinigungsschritt angeschlossen werden.

Bei einer bisher als am besten empfundenen Ausführungsform der Erfindung wird die Gießharzmischung nach dem Druckgelierverfahren in die Hohlräume zwischen den Blechen 1 und den übrigen Bauelementen der Baugruppe 45 bzw. zwischen diesen und den Wandungen der Formhöhlung eingebracht. Das Druckgelierverfahren ist besonders vorteilhaft, da hierbei der während der Aushärtung auftretende Schwund ausgeglichen wird. Bei diesem auch als Reaktionsharz-Spritzgießen bezeichneten Verfahren (z.B. Kunststoff-Lexikon, Hrg. Dr.-Ing. K. Stoeckhart und Prof. Dr.-Ing. W. Woebcken, Carl Hanser Verlag, München, BRD, 8. Auflage, 1992) können sowohl Reaktionsharzmassen mit langer Topfzeit als auch hochreaktive Harzmassen verwendet werden, die mit Hilfe der Mischbebälter 42, 43 erst kurz vor dem Einspritzen in das Werkzeug 28 automatisch gemischt und dosiert werden. Dabei können die beiden in Fig. 7 gezeigten Eingänge 40, 41 auch in einen Druckbehälter münden, aus dem die fertige Reaktionsharzmischung dann mittels Druckluft in die Leitung 37 gepreßt wird.

Zur Herstellung der Baugruppe 45 eignen sich zahlreiche Gemische, insbesondere solche, die thermisch härtbar sind.

Bevorzugte härtbare Gemische sind Epoxidharz/Härter-Mischungen und Mischungen aus einem gespannten Cycloolefin und einem Katalysator für die ringöffnende Metathese-Polymerisation.

Als Epoxidharze, die erfindungsgemäss eingesetzt werden können, eignen sich alle Typen von Epoxidharzen, wie beispielsweise solche, die direkt an Sauerstoff-, Stickstoff- oder Schwefelatome gebundene Gruppen der Formel 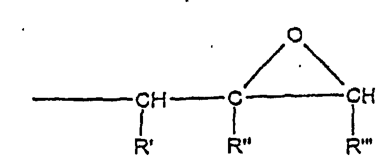 enthalten, worin entweder R' und R''' je ein Wasserstoffatom darstellen, in welchem Fall R" ein Wasserstoffatom oder eine Methylgruppe bedeutet, oder R' und R''' zusammen -CH₂CH₂- oder -CH₂CH₂CH₂- darstellen, in welchem Fall R" ein Wasserstoffatom bedeutet.

Als Beispiele solcher Harze seien Polyglycidylester und Poly(β-methylglycidyl)ester genannt, die man durch Umsetzung einer Verbindung enthaltend zwei oder mehr Carbonsäuregruppen pro Molekül mit Epichlorhydrin, Glycerindichlorhydrin oder β-Methylepichlorhydrin in Gegenwart von Alkali erhalten kann. Solche Polyglycidylester können sich von aliphatischen Polycarbonsäuren, z.B. Oxalsäure, Bernsteinsäure, Glutarsäure, Adipinsäure, Pimelinsäure, Korksäure, Azelainsäure, Sebacinsäure oder dimerisierter oder trimerisierter Linolsäure, von cycloaliphatischen Polycarbonsäuren, wie Tetrahydrophthalsäure, 4-Methyltetrahydrophthalsäure, Hexahydrophthalsäure und 4-Methylhexahydrophthalsäure, und von aromatischen Polycarbonsäuren, wie Phthalsäure, Isophthalsäure und Terephthalsäure, ableiten.

Weitere Beispiele sind Polyglycidylether und Poly-(β-methylglycidyl)ether, die durch Umsetzung einer mindestens zwei freie alkoholische und/oder phenolische Hydroxylgruppen pro Molekül enthaltenden Verbindung mit dem entsprechenden Epichlorhydrin unter alkalischen Bedingungen, oder auch in Gegenwart eines sauren Katalysators mit nachfolgender Alkalibehandlung, erhältlich sind.

Diese Ether lassen sich mit Poly-(epichlorhydrin) aus acyclischen Alkoholen, wie Ethylenglykol, Diethylenglykol und höheren Poly-(oxyethylen)-glykolen, Propan-1,2-diol und Poly-(oxypropylen)-glykolen, Propan-1,3-diol, Butan-1,4-diol, Poly-(oxytetramethylen)-glykolen, Pentan-1,5-diol, Hexan-1,6-diol, Hexan-2,4,6-triol, Glycerin, 1,1,1-Trimethylolpropan, Pentaerythrit und Sorbit, aus cycloaliphatischen Alkoholen, wie Resorcit, Chinit, Bis-(4-hydroxycyclohexyl)-methan, 2,2-Bis-(4-hydroxycyclohexyl)-propan und 1,1-Bis-(hydroxymethyl)-cyclohexen-3, und aus Alkoholen mit aromatischen Kernen, wie N,N-Bis-(2-hydroxyethyl)-anilin und p,p'-Bis-(2-hydroxyethylamino)-diphenylmethan, herstellen. Man kann sie ferner aus einkernigen Phenolen, wie Resorcin und Hydrochinon, sowie mehrkernigen Phenolen, wie Bis-(4-hydroxyphenyl)-methan, 4,4-Dihydroxydiphenyl, Bis-(4-hydroxyphenyl)-sulfon, 1,1,2,2-Tetrakis-(4-hydroxyphenyl)-ethan, 2,2-Bis-(4-hydroxyphenyl)-propan (Bisphenol A) und 2,2-Bis-(3,5-dibrom-4-hydroxyphenyl)-propan, herstellen.

Weitere geeignete Hydroxyverbindungen zur Herstellung von Polyglycidylethem und Poly-(β-methylglycidyl)ethern sind die durch Kondensation von Aldehyden, wie Formaldehyd, Acetaldehyd, Chloral und Furfural, und Phenolen, wie zum Beispiel Phenol, o-Kresol, m-Kresol, p-Kresol, 3,5-Dimethylphenol, 4-Chlorphenol und 4-tert,-Butylphenol, erhältlichen Novolake.

Poly-(N-glycidyl)-verbindungen können beispielsweise durch Dehydrochlorierung der Umsetzungsprodukte von Epichlorhydrin mit mindestens zwei Aminowasserstoffatome enthaltenden Aminen, wie Anilin, n-Butylamin, Bis-(4-aminophenyl)-methan und Bis-(4-methylaminophenyl)-methan, erhalten werden. Weitere geeignete Poly-(N-glycidyl)-verbindungen sind Triglycidylisocyanurat sowie N,N'-Diglycidylderivate von cyclischen Alkylenharnstoffen, wie Ethylenharnstoff und 1,3-Propylenharnstoff, und Hydantoinen, wie zum Beispiel 5,5-Dimethylhydantoin.

Poly-(S-glycidyl)-verbindungen sind zum Beispiel die Di-S-glycidylderivate von Dithiolen, wie Ethan-1,2-dithiol und Bis-(4-mercaptomethylphenyl)-ether.

Beispiele für Epoxidharze mit Gruppen der Formel 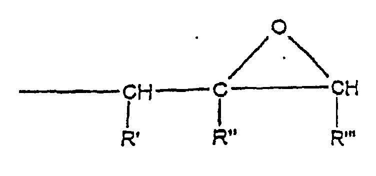 worin R' und R" ' zusammen eine -CH₂CH₂- oder eine -CH₂-CH₂-CH₂-Gruppe bedeuten, sind Bis-(2,3-epoxycyclopentyl)-ether, 2,3-Epoxycyclopentylglycidylether, 1,2-Bis-(2,3-epoxycyclopentyloxy)-ethan und 3,4-Epoxycyclohexylmethyl-3',4'-epoxycyclohexancarboxylat.

In Betracht kommen auch Epoxidharze, in welchen die Glycidylgruppen bzw. β-Methylglycidylgruppen an Heteroatome verschiedener Art gebunden sind, z.B. das N,N,O-Triglycidylderivat des 4-Aminophenols, der Glycidylether/Glycidylester der Salicylsäure oder p-Hydroxybenzoesäure, N-Glycidyl-N'-(2-glycidyloxypropyl)-5,5-dimethylhydantoin und 2-Glycidyloxy-1,3-bis-(5,5-dimethyl-1-glycidylhydantoinyl-3)-propan.

Gewünschtenfalls kann man Epoxidharzgemische verwenden.

Bevorzugt werden Diglycidylether von Bisphenolen. Beispiele dafür sind Bisphenol A-diglycidylether, Bisphenol F-diglycidylether und Bisphenol S-diglycidylether. Besonders bevorzugt ist Bisphenol A-diglycidylether.

Ganz besonders bevorzugt sind flüssige und niederviskose Epoxidharze. Zweckmässig übersteigt die Viskosität bei 25°C einen Wert von 20'000 mPa·s nicht.

In dem erfindungsgemässen Verfahren können im Prinzip sämtliche bekannten Epoxidharzhärter verwendet werden.

Vorzugsweise wird als Epoxidharzhärter eine Carbonsäure oder ein Carbonsäureanhydrid eingesetzt.

Beispiele für geeignete Carbonsäurehärter sind:
aliphatische Dicarbonsäuren, wie Oxalsäure, Malonsäure, Bernsteinsäure, Glutarsäure, Adipinsäure, Pimelinsäure, Korksäure, Azelainsäure, Sebacinsäure, 3,6,9-Trioxaundecandisäure, oder dimerisierte oder trimerisierte Linolsäure;
cycloaliphatische Polycarbonsäuren, wie beispielsweise Tetrahydrophthalsäure,
4-Methyltetrahydrophthalsäure, Hexahydrophthalsäure und 4-Methylhexahydrophthalsäure;
aromatische Dicarbonsäuren, wie Phthalsäure, Isophthalsäure, Terephthalsäure oder Naphthalsäure;
oder Diester-Dicarbonsäuren, die beispielsweise durch Umsetzung von Glykolen, z.B. Polypropylenglykol mit zwei Äquivalenten Dicarbonsäureanhydrid, wie z.B. Tetrahydrophthalsäureanhydrid, erhältlich sind.

Als Anhydridhärter können prinzipiell alle Anhydride von di- und höherflinktionellen Carbonsäuren, wie lineare aliphatische polymere Anhydride und cyclische Carbonsäureanhydride in Frage kommen.

### Beispiele für geeignete Anhydridhärter sind:

Polysebacinsäurepolyanhydrid, Polyazelainsäurepolyanhydrid, Bernsteinsäureanhydrid, Citraconsäureanhydrid, Itaconsäureanhydrid, alkenylsubstituierte Bernsteinsäureanhydride, Dodecenylbernsteinsäureanhydrid, Maleinsäureanhydrid, Tricarballylsäureanhydrid, Nadicanhydrid, Methylnadicanhydrid, Linolsäureaddukt an Maleinsäureanhydrid, alkylierte Endoalkylentetrahydrophthalsäureanhydride, Methyltetrahydrophthalsäureanhydrid, Tetrahydrophthalsäureanhydrid, Hexahydrophthalsäureanhydrid, Pyromellitsäuredianhydrid, Trimellitsäureanhydrid, Phthalsäureanhydrid, Tatrachlorphthalsäureanhydrid, Tetrabromphthalsäureanhydrid, Dichlormaleinsäureanhydrid, Chlornadicanhydrid und Chlorendicanhydrid.

Vorzugsweise werden flüssige oder leicht schmelzende Dicarbonsäureanhydride als Epoxidharzhärter eingesetzt.

Besonders bevorzugte Anhydridhärter sind Methylnadicanhydrid, Tetrahydrophthalsäureanhydrid und Methyltetrahydrophthalsäureanhydrid, wobei Methylnadicanhydrid und Methyltetrahydrophthalsäureanhydrid vorzugsweise als Isomerengemisch eingesetzt werden.

Falls gewünscht kann der Anhydridhärter in Kombination mit einem für Anhydridhärter üblichen Reaktionsbeschleuniger eingesetzt werden. Als Reaktionsbeschleuniger eignen sich z.B. tertiäre Amine, Carbonsäuresalze, Metallchelate oder Organophosphine. Bevorzugte Beschleuniger sind die tertiären Amine, wie z.B. N,N-Dimethylbenzylamin, oder substituierte Imidazole.

In einer weiteren bevorzugten Ausführungsform der Erfindung wird als härtbares Gemisch eine Mischung aus einem gespannten Cycloolefin und einem Katalysator für die ringöffnende Metathese-Polymerisation eingesetzt.

Unter gespannten Cycloolefinen sind im Rahmen der vorliegenden Erfindung alle Cycloolefine mit Ausnahme des Cyclohexens und seiner Derivate, die nicht mit der ringöffnenden Metathese polymerisiert werden können, zu verstehen. Geeignete Cycloolefine sind beispielsweise in der WO 96/16100 und der WO 96/20235 beschrieben.

Vorzugsweise wird in dem erfindungsgemässen Verfahren ein Diels-Alder-Addukt von Cyclopentadien eingesetzt.

Besonders bevorzugt sind Tetracyclododecen, Methyltetracyclododecen und insbesondere Dicyclopentadien.

Als Katalysatoren für die ringöffnende Metathese-Polymerisation (ROMP-Katalysatoren) ist dem Fachmann eine grosse Zahl von Verbindungen der Übergangsmetalle Titan, Vanadium, Molybdän, Wolfram, Rhenium, Iridium, Ruthenium und Osmium bekannt. Hierbei handelt es sich beispielsweise um komplexe Metallhalogenide, Metallo-Carbene oder Koordinations-Katalysatoren vom Ziegler-Natta-Typ. Alle diese bekannten ROMP-Katalysatoren können im Prinzip als Komponente (b) in den erfindungsgemässen Zusammensetzungen verwendet werden.

Vorzugsweise wird ein Ruthenium(+II)-Komplexsalz oder ein Osmium(+II)-Komplexsalz, besonders bevorzugt ein Ruthenium(+II)-Komplexsalz, als Komponente (b) verwendet.

Da die Verwendung absolut wasserfreier Substanzen und Apparaturen einen zusätzlichen Aufwand erfordert, empfiehlt es sich, feuchtigkeitsunempfindliche ROMP-Katalysatoren einzusetzen, wie z.B. die in der WO 96/16100 und der WO 96/20235 beschriebenen Ruthenium(+II)-und Osmium(+II)-Komplexsalze.

Besonders bevorzugte ROMP-Katalysatoren sind
[(Cyclohexyl)₃P]₂RuCl₂, [(C₆H₅)₃P]₃ RuCl₂, [(C₆H₅)₃P]₃ (CO)RuH₂, [(C₆H₅)₃P]₃ RuCl(Cyclopentadienyl), [(Cyclohexyl)₃P]₂(CH₃OH)Ru(Tosylat)₂, [(o-Tolyl)₃P]₃RuCl₂, [(CH₃)₂CH]₃P(p-Cymol)RuCl₂ und insbesondere (Cyclohexyl)₃P(p-Cymol)RuCl₂.

Die gewünschte Viskosität des härtbaren Gemisches kann durch Zusatz von thermoplastischen Materialien eingestellt werden. Beispiele für geeignete Thermoplasten sind Polystyrol, Polynorbornen (z.B. Norsorex^{•} NS der Fa. Nippon Zeon), hydrierte Polynorbornenderivate (z.B. Zeonex^{•} der Fa. Nippon Zeon), Polycycloocten (z.B. Vestenamer^{•} der Fa. Hüls) und Polybutadien.

Ein besonderer Vorteil des beschriebenen Verfahrens zur Herstellung der Baugruppe 45 besteht darin, daß die Verfahrensschritte der Durchimprägnierung des lose geschichteten Blechpakets 8, der Umhüllung der übrigen Bauelemente und der gesamten Baugruppe 45 mit einer Korrosionsschicht 46 (Fig. 6) sowie der festen Verbindung aller Teile miteinander in einem einzigen Arbeitsschritt erfolgen können, ohne daß zusätzliche mechanische Verbindungsmittel benötigt werden. Dabei können die Vorgänge der Be- und Entladung des Werkzeugs 28, das Öffnen und Schließen des Werkzeugs 28 und das Füllen der verbleibenden Hohlräume innerhalb der Formhöhlung weitgehend automatisiert werden. Werden außerdem härtbare Gemische mit elektrisch isolierenden Eigenschaften verwendet, was für die oben genannten Materialien zutrifft, dann ergibt sich der weitere Vorteil, daß die Bleche 1 in dem einzigen genannten Arbeitsschritt auch mit einer elektrisch isolierenden Schicht umhüllt werden, so daß im Prinzip auch völlig unvorbehandelte, keine Isolierschichten aufweisende Elektrobleche als Ausgangsmaterialien verwendet werden können.

Ein weiterer überragender Vorteil der Erfindung besteht in diesem Fall darin, daß die einzelnen Bleche 1 des Blechpakets 8 in einem zwar völlig unvorbehandelten, aber dennoch gestapelten und dicht gepackten Zustand in das Werkzeug 28 eingegeben werden können. Aufgrund der natürlichen Oberflächenrauheit im Bereich ihrer Breitseiten 7 verbleiben zwischen den Blechen 1 auch im gestapelten, dicht gepackten Zustand ausreichend viele und große Hohlräume, die sich beim Eindringen des Gemischs in das Werkzeug 28 mit diesem Gemisch füllen, das dann im erhärteten Zustand ohne Bildung schädlicher Blasen oder dgl. die erforderliche Isolierung zwischen den einzelnen Blechen 1 bewirkt. Diese Wirkung kann noch dadurch verbessert und optimiert werden, daß die Kavität vor dem oder beim Einspritzen des Gemischs zumindest teilweise evakuiert wird, um einen geringen, ggf. durch Versuche zu ermittelnden Unterdruck von z.B. 2 bis 10 Millibar herzustellen und das Gemisch dadurch zusätzlich in die Kavität hineinzusaugen, wodurch gleichzeitig die Notwendigkeit entfällt, die noch in der Kavität befindliche Luft mit Hilfe des Gemischs zu verdrängen.

Vorteilhaft ist schließlich auch, daß die äußere Form der Baugruppe 45 weitgehend unabhängig von der durch Stanzen hergestellten Form der einzelnen Bleche 1 und der um diese gelegten Wicklung 19 gewählt werden kann. Insbesondere kann durch entsprechende Ausbildung der Formhöhlung sichergestellt werden, daß die äußere Korrosionsschicht ausreichend dick und umweltbeständig ist, während gleichzeitig durch die Stapelung der Bleche 1 und den zu ihrer Verspannung verwendeten Druck die erwünschten dünnen Klebund ggf. Isolierschichten zwischen den einzelnen Blechen 1 herstellbar sind.

Die Ausführungsform nach Fig. 1 bis 8 kann auf vielfache Weise modifiziert und/oder ergänzt werden. Insbesondere kann z.B. vorgesehen werden, die Unterseiten 4 (Fig. 1) der Bleche 1 bzw. des gesamten Blechpakets und/oder die Unterseiten der Polwangen 12,13 von härtbarem Gemisch frei zu halten. Hierzu wird z.B. die Kavität des Werkzeugs 28 so ausgebildet, daß die genannten Unterseiten nach dem Anordnen der verschiedenen Bauelemente im Werkzeug 28 unmittelbar an entsprechenden Wandteilen anliegen. Da die Unterseiten der Blechpakete und/oder der Polwangen 12,13 in einem fertigen, meistens aus einer Mehrzahl derartiger Magnetpole bestehenden Magneten durch unterhalb der Wicklungen 19 angeordnete, ferromagnetische Polrücken magnetisch miteinander verbunden werden, wird auf diese Weise sichergestellt, daß in den Grenzflächen zwischen den Magnetpolen und den Magnetrücken keine magnetisch schädlichen, durch eingeschlossenes Gemisch gebildeten Spalte entstehen.

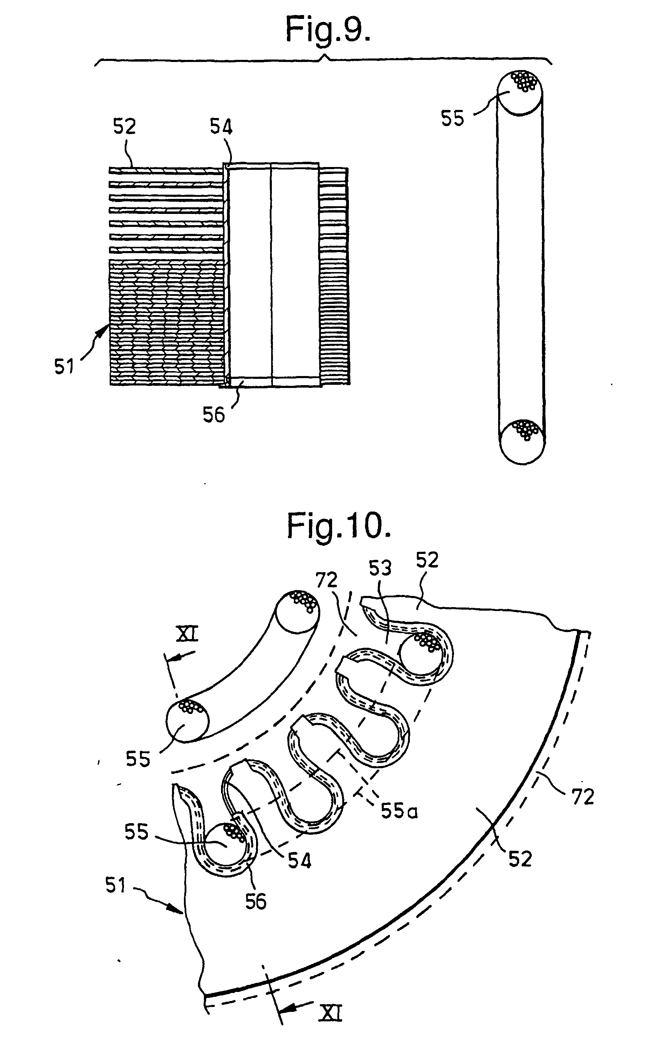

Fig. 9 bis 14 zeigen die Herstellung eines Blechpakets 51 für den Ständer einer elektrischen Wechselstrom-Maschine. Das Blechpaket 51 enthält analog zu Fig. 1 bis 8 eine Vielzahl von Blechen oder Lamellen 52, die im oberen Teil der Fig. 9 im auseinandergezogenen und im unteren Teil der Fig. 9 im fertig gestapelten, parallel und bündig aufeinander liegenden Zustand dargestellt sind. Die Bleche 52 werden durch Ausstanzen aus einem rohen, keine Klebmittelschicht aufweisenden, ferromagnetischen Blechstreifen od. dgl. erhalten. Die Bleche 52 haben im Ausführungsbeispiel identische Abmessungen und, wie in der Draufsicht nach Fig. 10 erkennbar ist, eine kreisringförmige Gestalt. An ihrem Innenumfang sind die Bleche 52 mit U-förmigen Ausschnitten 53 versehen, die im gestapelten Zustand aufeinander ausgerichtet sind und durchgehende Nuten bilden. In diese Nuten werden in an sich bekannter Weise Nuthülsen 54 eingepreßt, die sich entsprechend Fig. 9 über die ganze Höhe des Blechpakets 51 erstrecken und auf einfache Weise die Stapelbildung ermöglichen.

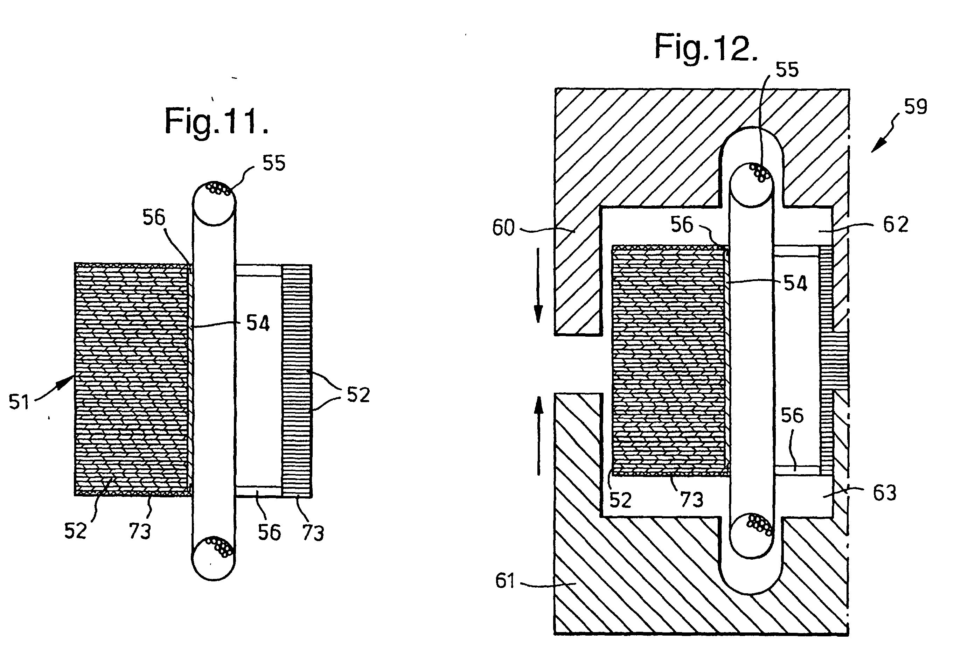

Die Nuthülsen 54 dienen zur Aufnahme von Wicklungen 55 (Fig. 9), deren Mittellinien einen im wesentlichen flachovalen Verlauf haben, wie aus der Vorderansicht bzw. Draufsicht nach Fig. 9 und 10 für eine noch nicht montierte Wicklung 55 erkennbar ist. Diese entsprechend vorbereiteten Wicklungen 55 werden in Abhängigkeit von der im Einzelfall vorgesehenen Wicklungsart mit ihren langen Seiten in Nuthülsen 54 eingepreßt (Fig. 10), die um das Zwei- oder Mehrfache, in Fig. 10 um das Dreifache der Nutteilung voneinander beabstandet sind, während ihre kurzen Seiten die Wickelköpfe bilden. Im montierten Zustand nimmt daher die Wicklung 55 die in Fig. 10 mit der gestrichelten Linie 55a angedeutete Lage ein (vgl. auch Fig. 11). Die Nuthülsen 54 bestehen zweckmäßig aus Papier, Pappe oder einem isolierenden Kunststoff, so daß die Wicklungen 55 ausreichend gegen die Bleche 52 isoliert sind, auch wenn diese keine Isolierschicht aufweisen oder diese durch den Stanzvorgang verloren haben. Zur axialen Fixierung der Nuthülsen 54 im Blechpaket 51 kann je ein Nuthülsenbund 56 (Fig. 11) dienen, der auf die oberen bzw. unteren Enden der Nuthülsen 54 aufgeclipst wird oder auch in die Nuthülsen 54 als Falz integriert sein kann.

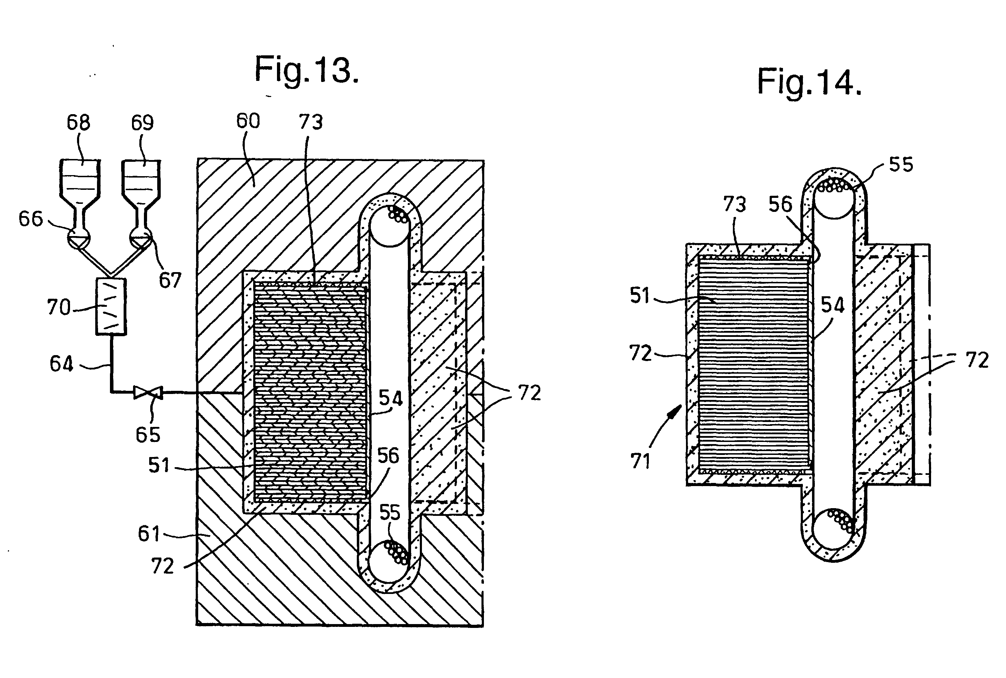

Nachdem alle Wicklungen 55 in die zugehörigen Nuthülsen 54 eingesetzt und in der erforderlichen Weise elektrisch miteinander verbunden worden sind (Fig. 11), wird die lose vormontierte Baugruppe analog zu der Baugruppe nach Fig. 4 in ein Werkzeug 59 eingelegt (Fig. 12,13), das im Ausführungsbeispiel zwei Werkzeugbälften 60,61 aufweist, die an einander gegenüberliegenden Seiten mit Aussparungen 62,63 versehen sind, die im geschlossenen Zustand des Werkzeugs 59 eine Formhöhlung bzw. Kavität bilden, deren Abmessungen geringfügig größer als die Außenabmessungen der eingelegten Baugruppe sind. Die Positionierung der Baugruppe im Werkzeug kann analog zu Fig. 6 mit Hilfe von nicht dargestellten Distanzstücken oder anderen Positionierhilfen erfolgen, die vorzugsweise dort an der Baugruppe angreifen, wo eine Umhüllung mit dem härtbaren Gemisch nicht erforderlich ist.

Nach dem Schließen des Werkzeugs 59 in Richtung der in Fig. 12 eingezeichneten Pfeile wird ein härtbares Gemisch in die Kavität eingebracht, wozu das Werkzeug 59 analog zu Fig. 7 mit einer bis zur Kavität reichenden Einlaßöffnung versehen wird, die mittels einer Leitung 64 (Fig. 14) mit einem Steuerventil 65 und über Dosierpumpen 66,67 an Mischbehälter, 68,69 angeschlossen wird, die ein Reaktionsharz bzw. einen Härter od. dgl. enthalten, um daraus das Gemisch zuzubereiten. In einem Mischer 70 werden die mit den Dosierpumpen 66,67 dosierten Reaktionsharz- und Härteranteile gemischt. Die Verfahrensschritte des Einbringens des Gemischs in die Kavität, des Härtens bzw. Anhärtens des Gemischs, des Temperns und ggf. Reinigens sind analog zum Ausführungsbeispiel nach Fig. 1 bis 8 und brauchen daher nicht noch einmal beschrieben werden. Dasselbe gilt für die anwendbaren Gemische, insbesondere Gießharzmischungen, deren Zubereitung, die bevorzugte Einspritzung des Gemisches unter einem Druck von z.B. 1 bis 3 bar, die vorzugsweise zusätzliche Evakuierung der Kavität und die bevorzugte Anwendung des Druckgelierverfahrens.

Nach der Entformung wird die aus Fig. 14 ersichtliche, fertige Baugruppe 71 in Form eines Ständers erhalten. Diese Baugruppe 71 ist rundum mit einer Korrosionsschutz- und ggf. Isolierschicht 72 versehen, deren Dicke dem Abstand der verschiedenen Bauelemente von den Wänden der zugehörigen Werkzeughälften 60,61 im geschlossenen Zustand des Werkzeugs 59 entspricht und entsprechend vorgewählt werden kann.

Die Vorteile, die bei der Herstellung der Baugruppe 71 nach dem beschriebenen Verfahren erzielt werden, sind analog denen, die oben in Verbindung mit der Baugruppe 45 erläutert wurden. Dabei kann die äußere Form der fertigen Baugruppe 71 weitgehend unabhängig von der Stanzform der einzelnen Bleche 52 gewählt werden, so daß bei Bedarf die endgültigen, elektrischen, magnetischen, mechanischen und/oder geometrischen Eigenschaften der Blechpakete bzw. der Baugruppe 71 zumindest teilweise erst durch die Behandlung aller Bauteile mit dem härtbaren Gemisch in einem Werkzeug erhalten werden. Dies gilt insbesondere im Hinblick auf die Anbringung der Schichten zwischen den einzelnen Blechen, den äußeren Korrosionsschutz, die dauerhafte Verbindung der verschiedenen Teile miteinander und die endgültige äußere Form der umhüllten Blechpakete, Baugruppen oder Teilen davon. Besonders vorteilhaft ist außerdem, daß weder zur Positionierung noch zur Verbindung der Einzelteile zusätzliche Verbindungsmittel wie z.B. Schrauben, Nieten, Kleber od. dgl. benötigt werden und die mechanische Festigkeit und Umweltbeständigkeit durch die Dicke der äußeren Umhüllung mit dem härtbaren Gemisch festgelegt werden kann.

Wie insbesondere Fig. 11 zeigt, kann es weiterhin zweckmäßig sein, die in das Werkzeug gegebenen Blechpakete oder Baugruppen an bestimmten Stellen, z.B. an ihren Außenseiten, mit einem aus einem porösen Material hergestellten Abstandselement 73 zu belegen, das z.B. aus einer aus Kunststoff-Fäden od. dgl. hergestellten, gewebten Matte besteht, die das Blechpaket 51 od. dgl. in einem gewünschten Abstand von den Wandungen der Formhöhlung hält. Derartige Elemente oder Matten werden beim Einspritzvorgang vollständig mit dem Gemisch durchtränkt, so daß beim Aushärten eine stabile, feste Kunstharzschicht entsteht, die eine mechanisch feste Außenwand an der fertigen Baugruppe 71 bildet und deren mechanische Stabilität vergrößert.

Zur Verbesserung der elektrischen Eigenschaften (Dielektrizitätskonstante, Verlustfaktor) können den härtbaren Mischungen Silane, z.B. die von der Fa. Osi Specialties unter der Bezeichnung Silquest® Silan angebotenen Verbindungen, zugesetzt werden. Geeignete Silane sind beispielsweise Octyltriethoxysilan, Methyltriethoxysilan und Vinyltriethoxysilan.

Außerdem können die härtbaren Mischungen Füllstoffe wie beispielsweise Metallpulver, Holzmehl, Glaspulver, Glaskugeln oder Halbmetall- und Metalloxide enthalten. Bevorzugte Füllstoffe sind Wollastonit, Al₂O₃ und SiO₂, wobei von den verschiedenen SiO₂-Modifikationen Quarzmehl besonders bevorzugt ist.

Neben den oben erwähnten Additiven können die härtbaren Gemische weitere übliche Zusatzstoffe wie z.B. Antioxidantien, Lichtschutzmittel, Weichmacher, Farbstoffe, Pigmente, Thixotropiemittel, Zähigkeitsverbesserer, Entschäumer, Antistatika, Gleitmittel und Entformungshilfsmittel enthalten.

Im übrigen werden die härtbaren Gemische nach bekannten Methoden hergestellt, üblicherweise mit Hilfe bekannter Mischaggregate (Rührer, Kneter, Walzen, Mühlen, Trockenmischer oder Dünnschichtengasungsmischer). Die verschiedenen Verfahren zur Herstellung von Formmassen sind dem Fachmann bekannt und beispielsweise in Becker/-Braun: "Kunststoff-Handbuch, Band 10, Duroplaste", Carl Hanser Verlag 1988, Seiten 515 ff. und 825., beschrieben.

Ist es erwünscht, die einzelnen Bleche in anderer als der oben erläuterten Weise zu stapeln, können sie auch mit geeigneten Hilfsmitteln, z. B. Spacern, so an den Enden fixiert werden, daß die Abstände zwischen den einzelnen Blechen ungefähr gleich sind. Es muß lediglich genügend Raum für den Eintritt der isolierenden Harzmasse in die Zwischenräume zwischen den einzelnen Blechen 1, 61 vorhanden sein. Der Abstand der Bleche 1 kann auf diese Weise z.B. auf 1 *µ*m bis 100 *µ*m, vorzugsweise auf 2 *µ*m bis 5 *µ*m eingestellt werden.

Die bei den erfindungsgemäßen Verfahren verwendbaren Metallbleche sind vorzugsweise Stahlbleche, obwohl auch andere ferromagnetische Materialien eingesetzt werden können.

Die Erfindung ist nicht auf die beschriebenen Ausführungsbeispiele beschränkt, die sich auf vielfache Weise abwandeln lassen. Dies gilt insbesondere im Hinblick auf die nach dem beschriebenen Verfahren herstellbaren, ferromagnetische Blechpakete aufweisenden Baugruppen. Nach dem beschriebenen Verfahren können Blechpakete aller Art für alle Geräte hergestellt werden, die einen magnetischen Kreis haben, der aus elektromagnetischen Gründen ein aus einzelnen Blechen zusammengesetztes Blechpaket erfordert. Unabhängig davon können die Blechpakete nach dem beschriebenen Verfahren auch einzeln hergestellt und nachträglich in konventioneller Bauweise mit anderen Bauelementen zu Baugruppen zusammengefaßt werden. Dabei versteht sich, daß die beschriebenen Blechpakete und/oder Baugruppen auch mit anderen, nicht näher erläuterten Bauelementen, z.B. mit nach außen führenden elektrischen oder mechanischen Anschlüssen, versehen werden können, die ebenfalls durch das umhüllende, härtbare Gemisch fixiert und/oder gebildet werden. Schließlich können die einzelnen Merkmale innerhalb des Umfangs der Ansprüche auch in anderen als den beschriebenen und in der Zeichnung dargestellten Kombinationen angewendet werden.

## Patentansprüche

1. Verfahren zur Herstellung eines aus ferromagnetischem Material bestehenden Blechpakets (8,51) für elektromagnetische Baugruppen, bei dem das Blechpaket (8,51) aus rohen Elektroblechen (1,52) zusammengesetzt und ggf. unter Anwendung von Positionierhilfen in einem formgebenden Werkzeug (28,59) positioniert wird und die Bleche (1,52) dann durch Einbringen eines härtbaren Gemischs in das Werkzeug (28,59) und An- oder Aushärten des Gemischs in einem einzigen Arbeitsschritt zum fertigen Blechpaket (8,51) miteinander verbunden werden, **dadurch gekennzeichnet, daß** es als Druckgelierverfahren ausgeführt und das ohne Anwendung von Abstandhaltern gebildete Blechpaket (8, 51) im Werkzeug (28, 59) zur Bildung einer Korrosionsschutzschicht gleichzeitig vollständig mit dem Gemisch umhüllt wird.

2. Verfahren zur Herstellung einer elektromagnetischen Baugruppe (45,71), die wenigstens ein aus ferromagnetischem Material bestehendes Blechpaket (8,51) und ein weiteres Bauelement (12-14,53-56) enthält, **dadurch gekennzeichnet, daß** das Blechpaket (8,51) aus rohen Elektroblechen (1,52) zusammengesetzt und zusammen mit dem weiteren Bauelement (12-14,53-56) ggf. unter Anwendung von Positionierhilfen in einem Werkzeug (28,59) positioniert wird und daß dann durch Einbringen eines härtbaren Gemischs in das Werkzeug (28,59) und An- oder Aushärten des Gemischs nach dem Druckgelierverfahren in einem einzigen Arbeitsschritt die Bleche (1, 52) zum fertigen Blechpaket (8, 51) miteinander verbunden werden, das Blechpaket (8, 51) mit dem Bauelement (12-14, 53-56) verbunden und die Baugruppe (45,71) zur Bildung einer Korrosionsschutzschicht mit dem Gemisch umhüllt wird.

3. Verfahren nach Anspruch 1 oder 2, **dadurch gekennzeichnet, daß** im Werkzeug ein Druck von 2 - 10 mbar aufrechterhalten wird.

4. Verfahren nach Anspruch 2 oder 3, **dadurch gekennzeichnet, daß** die Baugruppe (45,71) insgesamt erst durch das Gemisch mit ihren endgültigen elektrischen, magnetischen, mechanischen und/oder geometrischen Eigenschaften versehen wird.

5. Verfahren nach einem der Ansprüche 1 bis 4, **dadurch gekennzeichnet, daß** wenigstens ein Abschnitt des Blechpakets (8,51) und/oder des Bauelements (12-14,53-56) beim Einbringen in das Werkzeug (28,59) zum Ansetzen eines Positionierelements benutzt wird.

6. Verfahren nach Anspruch 5, **dadurch gekennzeichnet, daß** als Positionierelement ein aus einem porösen Material hergestelltes Abstandselement (73) verwendet wird.

7. Verfahren nach einem der Ansprüche 1 bis 6 **dadurch gekennzeichnet, daß** als härtbares Gemisch ein thermisch härtbares Gemisch verwendet wird.

8. Verfahren nach einem der Ansprüche 1 bis 7 **dadurch gekennzeichnet, daß** zur Herstellung des Blechpakets (8, 51) rohe, unvorbehandelte Bleche (1, 52) verwendet werden und die gegenseitige elektrische Isolierung zwischen den Blechen (1, 52) durch Anwendung eines härtbaren Gemischs mit elektrisch isolierenden Eigenschaften hergestellt wird.

9. Verfahren nach einem der Ansprüche 1 bis 8, **dadurch gekennzeichnet, daß** ausgewählte Bereiche der Bleche (1) bzw. des Blechpakets (8) vom Gemisch frei bleiben.

## Claims

1. Method of manufacturing a laminated core (8,51) consisting of ferromagnetic material for electro-magnetic units, in which method the laminated core (8,51) is assembled from crude magnetic steel sheets (1,52) and is positioned in a forming tool (28,59), possibly with the use of positioning aids, and then through the introduction of a hardenable mixture into the tool (28,59) and hardening of the mixture in a single working step the steel sheets (1,52) are connected to one another to form the finished laminated core (8,51), **characterised in that** it is carried out as a pressure gelation method and the laminated core (8,51), formed without the use of spacers, is simultaneously completely covered with the mixture in the tool (28,59) to form an anticorrosion layer.

2. Method of manufacturing an electromagnetic unit (45,71), which contains at least one laminated core (8,51) consisting of ferromagnetic material and an additional component (12-14,53-56), **characterised in that** the laminated core (8,51) is assembled from crude magnetic steel sheets (1,52) and is positioned together with the additional component (12-14,53-56) in a tool (28,59) possibly with the use of positioning aids, and in that then, through the introduction of a hardenable mixture into the tool (28,59) and hardening of the mixture according to the pressure gelation method in a single working step the steel sheets (1,52) are connected to one another to form the finished laminated core (8,51), the laminated core (8,51) is connected to the component (12-14,53-56) and the unit (45,71) is covered with the mixture to form an anticorrosion layer.

3. Method according to claim 1 or 2, **characterised in that** a pressure of 2 - 10 mbar is maintained in the tool.

4. Method according to claim 2 or 3, **characterised in that** the unit (45,71) as a whole is only provided with its final electrical, magnetic, mechanical and/or geometrical properties by the mixture.

5. Method according to one of claims 1 to 4, **characterised in that** at least a portion of t he laminated core (8,51) and/or of the component (12-14,53-56) is used on introduction into the tool (28,59) to place a positioning element onto.

6. Method according to claim 5, **characterised in that** a spacer element (73) produced from a porous material is used as a positioning element.

7. Method according to one of claims 1 to 6, **characterised in that** a thermally hardening mixture is used as the hardenable mixture.

8. Method according to one of claims 1 to 7, **characterised in that** that crude, untreated steel sheets (1,52) are used to produce the laminated core (8,51) and the mutual electrical insulation between the steel sheets (1,52) is produced by using a hardenable mixture with electrically insulating properties.

9. Method according to one of claims 1 to 8, **characterised in that** selected regions of the steel sheets (1) or of the laminated core (8) remain free from the mixture.

## Revendications

1. Procédé pour la fabrication d'un empilage de tôles (8, 51) en matériau ferromagnétique pour des ensembles électromagnétiques, dans lequel l'empilage de tôles (8, 51) est composé de tôles électriques (1, 52) brutes et positionné, le cas échéant en utilisant des dispositifs de positionnement, dans un outil de formage (28, 59) et les tôles (1, 52) sont ensuite, au cours d'une seule et même opération, reliées entre elles pour former un empilage de tôles (8, 51) fini, par l'introduction d'un mélange durcissable dans l'outil (28, 59) et le durcissement ou le début de durcissement du mélange, **caractérisé en ce qu'**il est réalisé en tant que procédé de gélification sous pression et que l'empilage de tôles (8, 51) formé sans utiliser d'écarteurs est en même temps, dans l'outil (28, 59), entièrement enrobé avec le mélange pour former une couche de protection contre la corrosion.

2. Procédé pour la fabrication d'un ensemble électromagnétique (45, 71) qui comprend au moins un empilage de tôles (8, 51) en matériau ferromagnétique et un autre élément de construction (12-14, 53-56), **caractérisé en ce que** l'empilage de tôles (8, 51) est composé de tôles électriques (1, 52) brutes et est positionné dans un outil (28, 59), le cas échéant en utilisant des dispositifs de positionnement, avec l'autre élément de construction (12-14, 53-56) et qu'ensuite les tôles (1, 52) sont, au cours d'une seule et même opération, reliées entre elles pour former un empilage de tôles (8, 51) fini, par l'introduction d'un mélange durcissable dans l'outil (28, 59) et le durcissement ou le début de durcissement du mélange suivant le procédé de gélification sous pression, l'empilage de tôles (8, 51) est relié à l'élément de construction (12-14, 53-56) et l'ensemble (45, 71) est enrobé avec le mélange pour former une couche de protection contre la corrosion.

3. Procédé selon la revendication 1 ou 2, **caractérisé en ce qu'**on maintient dans l'outil une pression de 2 à 10 mbar.

4. Procédé selon la revendication 2 ou 3, **caractérisé en ce que** l'ensemble (45, 71) n'est globalement pourvu de ses propriétés électriques, magnétiques, mécaniques et/ou géométriques définitives que par le mélange.

5. Procédé selon l'une des revendications 1 à 4, **caractérisé en ce qu'**au moins une partie de l'empilage de tôles (8, 51) et/ou de l'élément de construction (12-14, 53-56) est utilisée pour fixer un élément de positionnement lors de la mise en place dans l'outil (28, 59).

6. Procédé selon la revendication 5, **caractérisé en ce que** l'on utilise comme élément de positionnement un élément d'écartement (73) fabriqué dans un matériau poreux.

7. Procédé selon l'une des revendications 1 à 6, **caractérisé en ce que** l'on utilise comme mélange durcissable un mélange durcissable thermiquement.

8. Procédé selon l'une des revendications 1 à 7, **caractérisé en ce que** l'on utilise pour la fabrication de l'empilage de tôles (8, 51) des tôles (1, 52) brutes sans traitement préalable et l'isolation électrique mutuelle entre les tôles (1, 52) est réalisée par l'utilisation d'un mélange durcissable ayant des propriétés électriquement isolantes.

9. Procédé selon l'une des revendications 1 à 8, **caractérisé en ce que** des zones choisies des tôles (1) ou de l'empilage de tôles (8) restent exemptes du mélange.
